# EUROPEAN PATENT APPLICATION

(11) **EP 4 593 158 A1**
(43) Date of publication of application: **30.07.2025**
(21) Application number: 24212906.2
(22) Date of filing: 14.11.2024
(51) Int. Cl.: H01M 10/613, H01M 10/6557, H01M 10/6567, H01M 10/658, H01M 10/659, H01M 50/293

(54) **BATTERY MODULE**

(30) Priority: 26.01.2024 KR 20240012236
(71) Applicant: SAMSUNG SDI CO., LTD., Yongin-si, Gyeonggi-do 17084 (KR)
(72) Inventor: KIM, Hyun, 17084 Yongin-si (KR)
(74) Representative: Marks & Clerk LLP

(57) **Abstract**

A battery module configured to block heat propagation in response to an event occurring in a battery cell. The battery module includes battery cells arranged in one direction and at least one insulating spacer between the battery cells. The insulating spacer includes a pouch region having a space defined therein and a phase change material configured to fill at least a part of the space.

## Description

### BACKGROUND

### 1. Field

Embodiments relate to a battery module.

### 2. Description of the Related Art

A secondary battery is a power storage system that converts electrical energy into chemical energy, stores the chemical energy, and provides high energy density. Compared to a primary battery, which is not rechargeable, a secondary battery is rechargeable and is widely used in IT devices such as smartphones, cellular phones, laptop computers, and tablet computers. Recently, there has been increased interest in electric vehicles to prevent environmental pollution, and a high-capacity secondary battery is being adopted in electric vehicles. The secondary battery requires characteristics such as high density, high output, and stability.

The information disclosed in this section is provided only for enhancement of understanding of the background of the disclosure and therefore it may contain information that does not form the prior art.

### SUMMARY

Embodiments provide a battery module configured to block heat propagation in response to an event occurring in a battery cell.

It should be noted that objects of the present disclosure are not limited to the object as mentioned above, and other unmentioned objects of the present disclosure will be clearly understood by those skilled in the art from the following description and the accompanying drawings.

A battery module according to an embodiment of the present disclosure includes battery cells arranged in one direction and at least one insulating spacer between the battery cells. The insulating spacer includes a pouch region having a space defined therein and a phase change material configured to fill at least a part of the space.

The phase change material may be configured to be in a liquid state in response to the temperature of the phase change material being less than a predetermined temperature.

The phase change material may be configured to vaporize from a liquid state to a gas state in the space of the pouch region in response to the temperature of the phase change material being equal to or higher than the predetermined temperature.

The phase change material may fill half or less of the space.

The insulating spacer (e.g. the pouch region of the insulating spacer) may include a front sheet and a rear sheet coupled to each other and defining the pouch region. An edge of the pouch region may be ultrasonically fused or bonded.

The pouch region may include polyethylene or polypropylene.

The shape of the pouch region may be configured vary in response to the pressure in the pouch region.

The front sheet and the rear sheet of the pouch region may be in contact with battery cells adjacent thereto.

The phase change material may include a material having a boiling point from approximately 60 °C to approximately 150 °C.

The phase change material may include methoxy-nonafluorobutane (C₄F₉OCH₃).

The pouch region may seal the phase change material by ultrasonic fusion or bonding.

The volume of the phase change material may be configured to increase sequentially from an upper part of the pouch region.

The insulating spacer may further include a front sheet, a rear sheet, and an adhesion region bonding the front sheet and the rear sheet at substantially a middle of the pouch region.

The adhesion region may partition the pouch region into an upper part and a lower part.

The adhesion region may include two or more adhesion regions arranged in at least one row.

The adhesion region may be configured to maintain adhesion between the front sheet and the rear sheet even in response to the volume of the pouch region increasing.

The insulating spacer may further include a border region along the edge of the pouch region.

The border region may include mica.

At least some of the above and other features of the invention are set out in the claims.

### BRIEF DESCRIPTION OF THE DRAWINGS

The accompanying drawings, which are incorporated in this specification, illustrate embodiments and serve to further illustrate the technical ideas of the disclosure in conjunction with the detailed description of embodiments that follows, and the disclosure is not to be construed as limited to what is shown in such drawings. In the drawings:
FIG. 1A is a side sectional view showing a battery module according to an embodiment of the present disclosure;
FIG. 1B is a plan view showing the battery module according to the embodiment of the present disclosure;
FIG. 2A is a front view showing the configuration of an insulating spacer used in the battery module according to the embodiment of the present disclosure;
FIG. 2B is a side sectional view showing the configuration of the insulating spacer used in the battery module according to the embodiment of the present disclosure;
FIG. 3A is a side sectional view showing the operation of the insulating spacer upon the occurrence of an event in the battery module according to the embodiment of the present disclosure;
FIG. 3B is a plan view showing the operation of the insulating spacer upon the occurrence of the event in the battery module according to the embodiment of the present disclosure;
FIG. 4 is a sectional view showing the operation of the insulating spacer upon the occurrence of the event in the battery module according to the embodiment of the present disclosure;
FIG. 5A is a front view showing the configuration of an insulating spacer used in another embodiment of the battery module; and
FIG. 5B is a sectional view showing the operation of the insulating spacer of FIG. 5A upon the occurrence of an event in the battery module according to the embodiment of the present disclosure.

### DETAILED DESCRIPTION

Embodiments are provided to more fully illustrate the disclosure to a person having ordinary skill in the art, the following embodiments may be modified in various other forms, and the scope of the disclosure is not limited to the following embodiments. The embodiments are provided to make the disclosure more faithful and complete and to completely convey the idea of the disclosure fully to those skilled in the art.

In the following drawings, the thickness or size of each layer is exaggerated for convenience and clarity of description and the same reference symbols in the drawings refer to the same elements. As used herein, the term "and/or" includes any one of the enumerated items and any combination of one or more thereof. As used herein, the term "connected" refers not only to direct connection between members A and B but also to indirect connection between members A and B with member C interposed therebetween.

The terms used in the specification are intended to describe specific embodiments and are not intended to limit the disclosure. As used herein, singular forms may include plural forms, unless the context clearly indicates otherwise. As used herein, the terms "comprise" (or "include") and/or "comprising" (or "including") are intended to specify the presence of stated figures, numbers, steps, operations, members, elements, and/or groups thereof and do not exclude the presence or addition of one or more other figures, numbers, steps, operations, members, elements, and/or groups.

While terms such as first and second are used herein to describe various members, parts, regions, layers, and/or portions, the members, the parts, the regions, the layers, and/or the portions are not to be limited by the terms. The terms are used only to distinguish one member, one part, one region, one layer, or one portion from another member, another part, another region, another layer, or another portion. Thus, a first member, a first part, a first region, a first layer, or a first portion hereinafter described may refer to a second member, a second part, a second region, a second layer, or a second portion without departing from the teachings of the disclosure.

Terms related to space, such as "beneath," "below," "lower," "above," and "upper," may be utilized to facilitate understanding of one element or feature shown in the drawings as different from another element or feature. The terms related to space are intended to facilitate understanding of the disclosure in various states of process or use and are not intended to limit the disclosure. For example, if an element or feature in a figure is inverted, an element or feature described as "beneath" or "below" becomes "above" or "upper." Thus, "beneath" is a concept that encompasses "above" or "below".

Hereinafter, embodiments of the present disclosure will be described in detail with reference to the accompanying drawings.

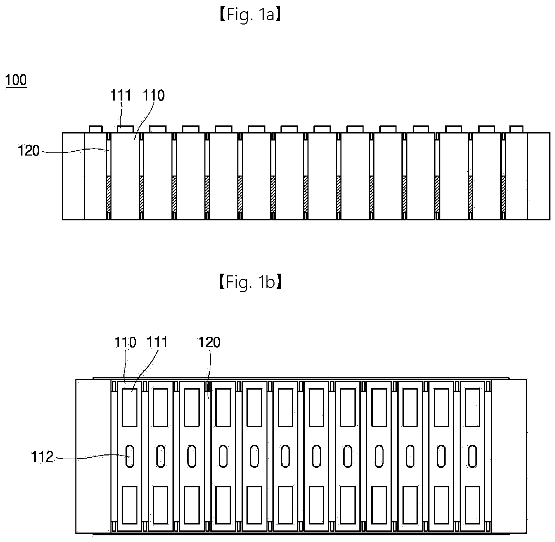

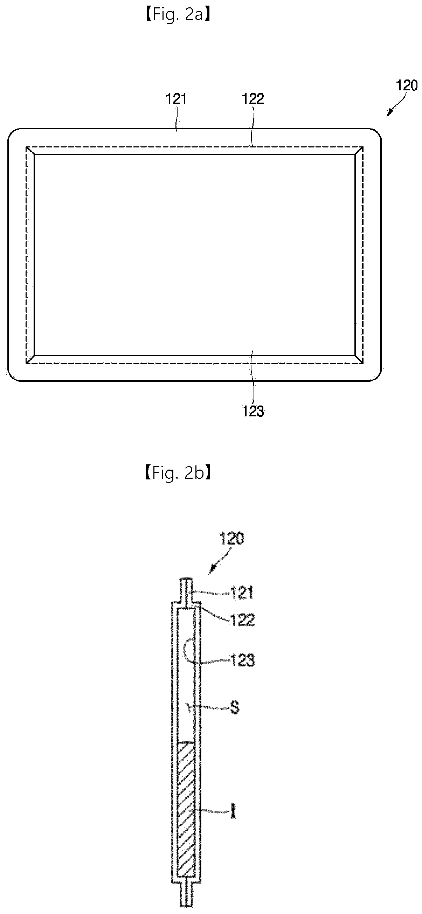

FIG. 1A is a side sectional view showing a battery module according to an embodiment of the present disclosure. FIG. 1B is a plan view showing the battery module according to the embodiment of the present disclosure. FIG. 2A is a front view showing the configuration of an insulating spacer in the battery module according to the embodiment of the present disclosure. FIG. 2B is a side sectional view showing the configuration of the insulating spacer used in the battery module according to the embodiment of the present disclosure.

Referring to FIG. 1A to FIG. 2B, the battery module 100 according to the embodiment of the present disclosure may include a plurality of battery cells 110 and a plurality of insulating spacers 120 located between adjacent battery cells 110.

The plurality of battery cells 110 are arranged in one direction. Each of the battery cells 110 may include an electrode assembly, in which a positive electrode plate, a separator, and a negative electrode plate are stacked or wound, and received or accommodated in a case together with an electrolyte. A cap plate configured to seal the case may be coupled to one surface of the case, and two electrode terminals 111 may be at the cap plate. A vent 112 may be formed in a part of the cap plate, which has a smaller thickness than the remaining part of the cap plate, and the vent 112 may be configured to open first in response to the pressure caused by a gas in the case being equal to or higher than a reference pressure.

The plurality of battery cells 110 may be arranged in one direction such that wide side surfaces of the cases of the battery cells 110 are adjacent to each other. The plurality of battery cells 110 may be coupled to each other via the insulating spacers 120 therebetween. Each of the insulating spacers 120 may have an area corresponding to the side surface of one of the battery cells 110, and the insulating spacers 120 may prevent (or at least mitigate) the cases of the battery cells 110 from directly contacting each other. The plurality of battery cells 110 may be electrically and thermally isolated from each other by the insulating spacers 120. The plurality of battery cells 110 may be connected to each other in series, in parallel, or in series and parallel via a busbar coupled to electrode terminals 111 on the tops of the battery cells 110.

The insulating spacers 120 are between the plurality of battery cells 110, and adjacent battery cells 110 may be spaced apart from each other by a distance corresponding to the thickness of the insulating spacer 120. The insulating spacers 120 may be made of an electrically insulative material, and may have a thermal insulation property. Each insulating spacer 120 may isolate corresponding ones of the battery cells 110 to prevent (or at least mitigate) heat of a specific battery cell 110 in which an event has occurred from being transferred to battery cells 110 adjacent thereto.

Referring to FIGs. 2A to 2B, each of the insulating spacers 120 may include a border region 121 and a pouch region 122 inside the border region 121.

The border region 121 of the insulating spacer 120 may include a rigid material capable of maintaining spacing between the battery cells 110. In one or more embodiments, the border region 121 of the insulating spacer 120 may be made of mica. The size and thickness of the border region 121 may be maintained independent of the temperature of the insulating spacer 120.

The pouch region 122 of the insulating spacer 120 may include a liquid received therein and may include a material configured to be deformed by the pressure of internal gas. In one or more embodiments, the pouch region 122 of the insulating spacer 120 may include polypropylene (PP) or polyethylene (PE).

The pouch region 122 may include two sheets, such as a front sheet and a rear sheet. The front sheet and the rear sheet may be joined to each other at a boundary abutting the border region 121 by ultrasonic fusion or bonding. An inner surface(s) 123 of the pouch region 122 may create a space S (e.g., an internal pocket or cavity).

A liquid phase change material I may be in a lower part of the space S of the pouch region 122. The phase change material I may fill a part of the lower part of the pouch region 122 to a certain height due to gravity, and an upper part of the space S may be empty. The phase change material I is sealed in the space S of the pouch region 122, and the seal may be maintained by ultrasonic fusion or bonding of the pouch region 122.

The phase change material I may be configured to be in a liquid state in response to the temperature of the phase change material I being less than a predetermined temperature, including the temperature at a normal condition. In response to the temperature of the insulating spacer 120 being equal to or higher than the predetermined temperature, however, the phase change material I may be configured to be vaporized and the phase of the phase change material may be changed from a liquid state to a gas state. The phase change material I in the gas state may have a larger volume than the phase change material I in the liquid state, and thus the vaporization of the phase change material I may increase the volume of the pouch region 122 enclosing the phase change material I. Consequently, the volume of the insulating spacer 120 including the pouch region 122 may be increased, and the distance between the battery cells 110 spaced apart from each other by the insulating spacer 120 may increase. Accordingly, in response to an event occurring in one of the battery cells 110 in which the temperature increases to or above the predetermined temperature, the distance from the battery cell 110 to battery cells 110 adjacent thereto may increase, thereby preventing propagation of heat generated by the event to the surroundings.

Hereinafter, the operation of the insulating spacer 120 upon the occurrence of an event in the example of the battery module according to the embodiment of the present disclosure will be described in more detail.

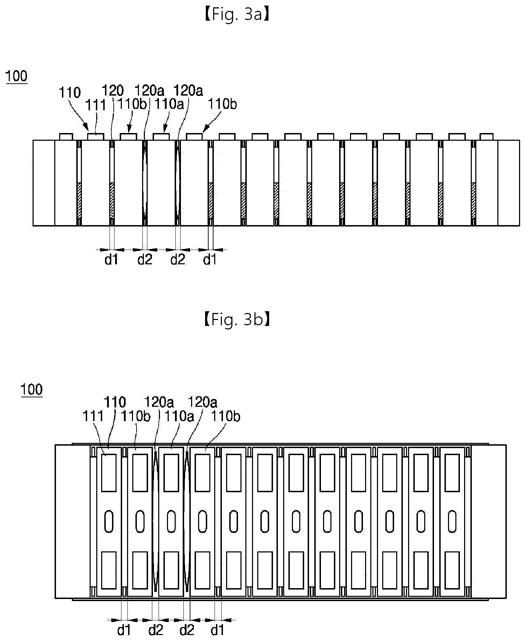

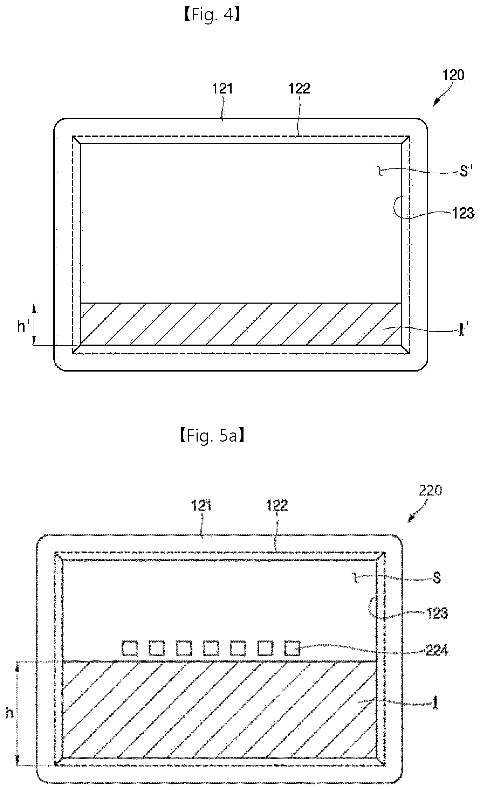

FIG. 3A is a side sectional view showing the operation of the insulating spacer 120 upon the occurrence of an event in the battery module 100 according to one embodiment of the present disclosure. FIG. 3B is a plan view showing the operation of the insulating spacer 120 upon the occurrence of the event in the battery module 100 according to one embodiment of the present disclosure. FIG. 4 is a sectional view showing the operation of the insulating spacer 120 upon the occurrence of the event in the battery module 100 according to one embodiment of the present disclosure.

In response to an event occurring in one of the battery cells 110a in which heat is generated, as shown in FIGs. 3A and 3B, the thickness of each of insulating spacers 120a located on opposite sides of the battery cell 110a may change from d1, which is a thickness in a normal state, to d2, which is larger than d1. This change may cause the distance between the battery cell 110a in which the event has occurred and battery cells 110b adjacent the battery cell 110a to increase, which is configured to prevent or reduce the heat generated by the event from being transferred to the neighboring battery cells 110b.

As shown in FIG. 4, the phase change material I may receive the heat generated by the event in the battery cell 110a and may be vaporized in the pouch region 122, whereby the phase change material I' may have a height h', which is lower than the height of the phase change material I in a normal state. The phase change material I may optionally be configured such that all (or substantially all) of the liquid is vaporized into gas. Consequently, the volume of the space S' in the pouch region 122 may be increased upon vaporization of the phase change material I, thereby increasing the distance between the battery cell 110a in which the event has occurred and the battery cells 110b adjacent to the battery cell 110a, as described above.

In one or more embodiments, the phase change material I may be a nonconductive liquid, and may have a boiling point from approximately 60 °C to approximately 150 °C. The phase change material I may include methoxy-nonafluorobutane (C₄F₉OCH₃). In one or more embodiments in which the volume of the space S of the pouch region 122 of the insulating spacer 120 is set to approximately 0.00004 m³, the degree of volume expansion may be set by filling the phase change material I to have a volume of approximately 0.00002 m³, which is half (or approximately half) of the volume of the space S. In one or more embodiments in which methoxy-nonafluorobutane is the phase change material I, the mass of the phase change material I may be approximately 0.03228 kg, because the density of methoxy-nonafluorobutane is approximately 1,614 kg/m³. In one or more embodiments in which the yield stress of the case of the battery cell 110 upon the occurrence of an event is approximately 5 MPa, if all of the phase change material I is vaporized, a specific volume of 0.0049 m³/kg may be considered under conditions of 5 MPa and 200 °C, and therefore the volume increased by vaporization may be approximately 0.00016 m³. In this embodiment, the volume of the space S of the pouch region 122 may become approximately 0.0002 m³, which is greater than the initial volume of approximately 0.00004 m³, and therefore the distance between the battery cells 110 may be increased to about (approximately) 10 mm. Accordingly, in response to an event occurring in one of the battery cells 110, the distance between the battery cell and battery cells 110 adjacent thereto may increase, thereby preventing (or at least mitigating) propagation of the heat generated by the event to the surroundings.

Hereinafter, the battery module according to another embodiment of the present disclosure will be described.

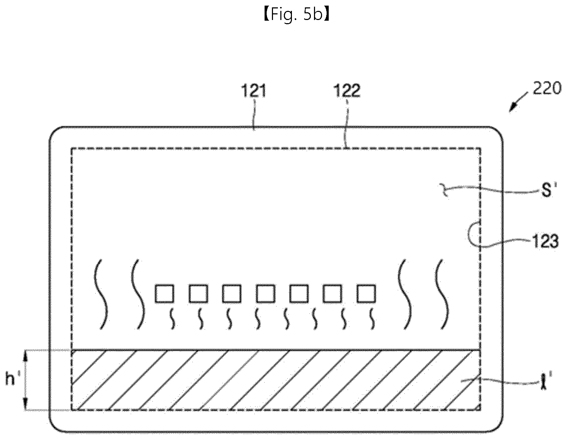

FIG. 5A is a front view showing the configuration of an insulating spacer 220 used in the battery module according to one embodiment of the present disclosure. FIG. 5B is a sectional view showing the operation of the insulating spacer 220 of FIG. 5A upon the occurrence of an event in the battery module according to the embodiment of the present disclosure.

Referring first to FIG. 5A, the insulating spacer 220 of the battery module according to one embodiment of the present disclosure may include an adhesion region 224 formed, for example, by ultrasonically fusing or bonding a front sheet and a rear sheet at approximately the middle thereof. As shown, the adhesion region 224 may include a plurality of adhesion regions arranged a single row, although in one or more embodiments two or more rows of adhesion regions may be provided. The plurality of adhesion regions 224 may be formed as a single long region as long as the adhesion region is configured to provide a flow path for gas to move (e.g., flow) in the middle of the pouch region 122.

Because the front sheet and the rear sheet of the pouch region 122 of the insulating spacer 220 remain coupled to each other at approximately the middle portions thereof through the adhesion region 224, the volumetric expansion of the pouch region 122 may occur in the upper portion of the pouch region 122 above the adhesion region 224 in response to the phase change material I being vaporized. Even if the same phase change material I is used between the embodiment depicted in FIG. 5a and the embodiment depicted in FIG. 4, therefore, the volume of the upper part of the pouch region 122 may mainly increase, whereby the insulating spacer 220 may undergo more volume expansion in the horizontal direction that in the previous embodiment.

In one or more embodiments, the volume of the phase change material I may be configured to increase sequentially from the upper part of the pouch region 122.

In one or more embodiments in which all (or substantially all) of the phase change material I is vaporized in response to an event in one of the battery cells, the volume of each of the upper part and the lower part of the pouch region 122 above and below the adhesion region 224, respectively, may increase. The middle of the pouch region 122 may be fixed by the adhesion region 224 and therefore may not (or substantially may not) volumetrically expand, resulting in a further increase in volume in the upper part and the lower part of the pouch region 224. As a result, the insulating spacer 220 may undergo more volume expansion in the horizontal direction, which may eventually space battery cells 120b adjacent to the battery cell 120a in which the event has occurred apart from the battery cell 120a by a greater distance compared to the embodiment depicted in FIG. 4.

As is apparent from the above description, a battery module according to an embodiment of the present disclosure may have a phase change material provided in an insulating spacer such that, in response to an event occurring in a specific battery cell, the phase change material is vaporized and the volume of the insulating spacer is increased such that the distance between the battery cell in which the event has occurred and battery cells adjacent thereto may be increased, and therefore it is possible to prevent (or at least mitigate) propagation of heat generated by the event in one of the battery cells to the surroundings.

The effects of the present disclosure are not limited to those described above, and other unmentioned technical effects will be apparent to those skilled in the art from the above description of embodiments.

The description of the embodiments is illustrative only, and a person having ordinary skill in the art to which the present disclosure pertains will understand that various modifications and other equivalents thereto are possible from the embodiments. The true scope of protection of the invention is therefore to be determined by the appended claims, and all differences in scope equivalent to those recited in the claims are to be construed as falling within the scope of protection defined by the claims.

## Claims

1. A battery module comprising:
a plurality of battery cells arranged in one direction; and
at least one insulating spacer between the plurality of battery cells,
wherein the insulating spacer comprises:
a pouch region having a space defined therein; and
a phase change material configured to fill at least a portion of the space.

2. The battery module as claimed in claim 1, wherein the phase change material is in a liquid state in response to a temperature of the phase change material being less than a predetermined temperature.

3. The battery module as claimed in claim 1 or claim 2, wherein the phase change material is configured to vaporize from a liquid state to a gas state in the space of the pouch region in response to a temperature of the phase change material being equal to or higher than a predetermined temperature.

4. The battery module as claimed in any one of claims 1 to 3, wherein the phase change material fills a half or less of the space.

5. The battery module as claimed in any one of claims 1 to 4, wherein the pouch region of the insulating spacer comprises a front sheet coupled to a rear sheet, and wherein an edge of the pouch region is ultrasonically fused or bonded.

6. The battery module as claimed in claim 5, wherein the pouch region comprises polyethylene or polypropylene.

7. The battery module as claimed in claim 5 or claim 6, wherein a shape of the pouch region is configured to vary in response to a pressure in the pouch region.

8. The battery module as claimed in any one of claims 5 to 7, wherein the front sheet and the rear sheet of the pouch region are in contact with battery cells of the plurality of battery cells adjacent to the front sheet and the rear sheet.

9. The battery module as claimed in any one of claims 1 to 8, wherein the phase change material comprises a material having a boiling point from approximately 60 °C to approximately 150 °C.

10. The battery module as claimed in any one of claims 1 to 9, wherein the phase change material comprises methoxy-nonafluorobutane (C₄F₉OCH₃).

11. The battery module as claimed in any one of claims 1 to 10, wherein:
(i) the pouch region seals the phase change material by ultrasonic fusion or bonding; and/or
(ii) a volume of the phase change material is configured to increase in response to being vaporized, the volume increasing sequentially from an upper part of the pouch region.

12. The battery module as claimed in any one of claims 1 to 4, wherein the insulating spacer comprises a front sheet, a rear sheet, and an adhesion region bonding the front sheet to the rear sheet at an approximately middle of the pouch region.

13. The battery module as claimed in claim 12, wherein the adhesion region partitions the pouch region into an upper part and a lower part.

14. The battery module as claimed in claim 13, wherein:
(i) the adhesion region comprises a plurality of adhesion regions arranged in at least one row; and/or
(ii) the adhesion region is configured to maintain adhesion between the front sheet and the rear sheet even in response to a volume of the pouch region being increased.

15. The battery module as claimed in any one of claims 5 to 14, wherein the insulating spacer further comprises a border region along an edge of the pouch region, optionally wherein the border region comprises mica.
